Europäisches Patentamt

European Patent Office

Office européen des brevets

(11) Veröffentlichungsnummer : **0 382 937 B1**

# EUROPÄISCHE PATENTSCHRIFT

(12)

(45) Veröffentlichungstag der Patentschrift :
**22.01.92 Patentblatt 92/04**

(21) Anmeldenummer : **89123546.7**

(22) Anmeldetag : **20.12.89**

(51) Int. Cl.$^5$ : **F24F 3/147, F25B 17/00**

(54) Warmregenerierende Adsorptionsanlage für feuchte, gasförmige Medien.

(30) Priorität : **17.02.89 DE 3904793**

(43) Veröffentlichungstag der Anmeldung :
**22.08.90 Patentblatt 90/34**

(45) Bekanntmachung des Hinweises auf die
Patenterteilung :
**22.01.92 Patentblatt 92/04**

(84) Benannte Vertragsstaaten :
**AT BE CH DE ES FR GB GR IT LI LU NL SE**

(56) Entgegenhaltungen :
**EP-A- 0 042 998
DE-A- 2 651 366
US-A- 4 548 046
US-A- 4 694 659
"Production", 1988, N.39, Seite 26**

(73) Patentinhaber : **Zander Aufbereitungstechnik
GmbH
Im Teelbruch 86
W-4300 Essen 18 - Kettwig (DE)**

(72) Erfinder : **Priess, Günter
Kimplerstrasse 98
W-4150 Krefeld (DE)**

(74) Vertreter : **Cohausz & Florack Patentanwälte
Postfach 14 01 61 Schumannstrasse 97
W-4000 Düsseldorf 1 (DE)**

EP 0 382 937 B1

## Beschreibung

Die Erfindung bezieht sich auf eine warmregenerierende Adsorptionsanlage für feuchte, gasförmige Medien mit zwei parallel zueinander liegenden Adsorbern, die im Wechsel von adsorbierendem Betrieb auf regenerierenden Betrieb mittels in ihren Zu- und Abfuhrleitungen angeordneten Vierwegeventilen umschaltbar sind, sowie mit einem Lufterhitzer und einem im Saugbetrieb betriebenen Gebläse, wobei für den regenerierenden Betrieb in einer ersten Phase das Gebläse dem Adsorber erwärmte Umgebungsluft über den eingeschalteten Lufterhitzer und in einer anschließenden zweiten Phase kühle Umgebungsluft mit Unterdruck über den ausgeschalteten Lufterhitzer zuführt.

Adsorptionsanlagen dieser Art sind bekannt (Zeitschrift "Produktion" 29.9.1988, Nr. 39, Seite 26). Bei einer solchen Adsorptionsanlage dient die Kühlung nach der Phase der Regenerierung mittels erwärmter Umluft dazu, das Adsorptionsmittel möglichst schnell wieder auf volle Aktivität zu bringen. Während in der ersten Regenerationsphase die erwärmte Luft mittels eines im Druckbetrieb betriebenen Gebläses mit zur Strömungsrichtung im adsorbierenden Betrieb entgegengesetzter Strömungsrichtung zugeführt wird, wird in der zweiten Regenerationsphase Kühlluft mittels des im Saugbetrieb betriebenen Gebläses mit zur Strömungsrichtung im adsorbierenden Betrieb gleichgerichteter Strömungsrichtung zugeführt. Diese Umschaltung von Druckbetrieb auf Saugbetrieb läßt sich nicht bei allen Gebläsen verwirklichen und hat bei solchen Gebläsen, bei denen die Umschaltung möglich ist, eine Minderung des Wirkungsgrades zur Folge.

Der Erfindung liegt die Aufgabe zugrunde, eine Adsorptionsanlage der eingangs genannten Art zu schaffen, bei der mit möglichst einfachen Mitteln eine Umschaltung von der ersten Phase, in der erwärmte Luft über den Adsorber geleitet wird, als auch in der zweiten Phase, in der Kühlluft über den Adsorber geleitet wird, möglich ist.

Diese Aufgabe wird bei der Adsorptionsanlage der eingangs genannten Art dadurch gelöst, daß der Lufterhitzer mit dem Einlaß eines der beiden Vierwegeventile und das Gebläse mit dem Auslaß des anderen Vierwegeventils verbunden ist.

Bei einer solchen Adsorptionsanlage ist weder ein aufwendiger, auf Druck- und Saugbetrieb umschaltbarer Ventilator erforderlich, noch ist eine aufwendige Schaltventilkombination für die Beschaltung des Ventilators und des Erhitzers erforderlich. Da nach wie vor nach der Regenerierung mit erwärmter Luft gekühlt wird, gibt es nach der Umschaltung auf Adsorberbetrieb nicht den sogenannten "Temperaturpeak" beziehungsweise "Taupunktpeak". Da die kühlende Luft im Saugbetrieb des Gebläses über den Adsorber geschickt wird, findet in der Kühlphase nur eine sehr geringe Vorbeladung des Adsorptionsmittels mit Feuchtigkeit statt.

Nach einer Ausgestaltung der Erfindung liegt in der vom Vierwegeventil zu dem Gebläse führenden Leitung ein Temperaturfühler einer Steuereinrichtung für den Betrieb der Heizeinrichtung in den beiden Phasen der Regeneration. Bei dieser Ausgestaltung der Erfindung wird über die Temperatur die Regeneration und die anschließende Kühlung beobachtet und in Abhängigkeit von diesen Werten der Erhitzer ausgeschaltet und die Anlage auf einen Wechsel der Adsorber umgeschaltet.

Da bei der Erfindung die Strömungsrichtung sowohl im Adsorptionsbetrieb als auch in den beiden Phasen des Regenerationsbetriebes gleich ist, ist nach einer weiteren Ausgestaltung in jedem Adsorber ein spezieller, das Adsorptionsmittel tragender Siebboden vorgesehen, der einerseits einen geringen Strömungswiderstand in Durchströmungsrichtung hat und andererseits selbstreinigend ist. Dieser Siebboden besteht aus parallelen, im Querschnitt dreieckigen Stäben, die mit einer in einer Ebene liegenden ebenen Seite die Stützfläche bilden und mit ihrer spitzwinkeligen Kante nach unten weisen.

Im folgenden wird die Erfindung anhand einer Zeichnung näher erläutert. Im einzelnen zeigen :

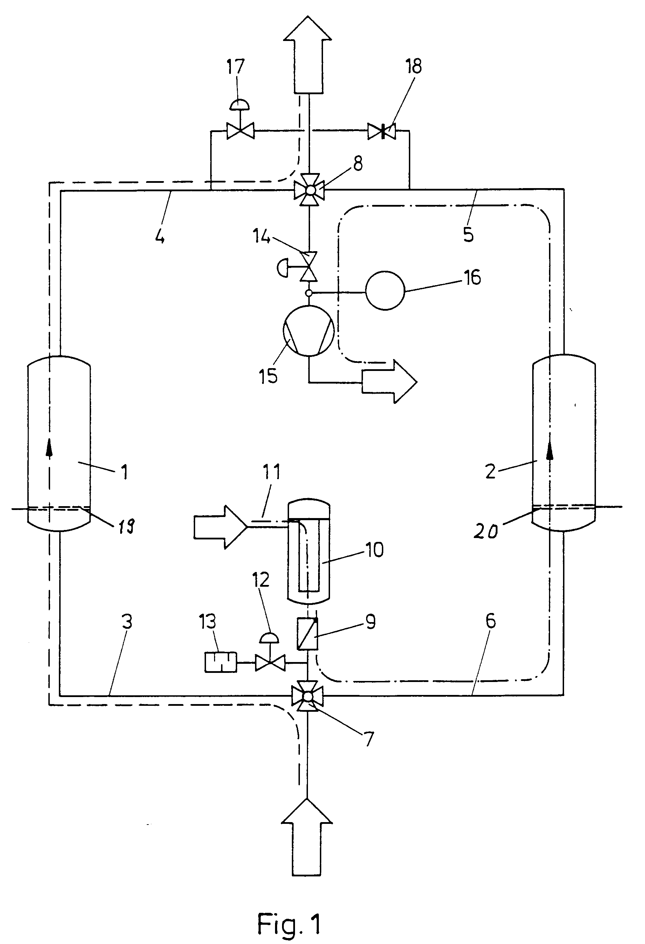

Fig. 1     eine Adsorptionsanlage im prinzipiellen Aufbau **und**
Fig. 2     einen Siebboden eines Adsorbers im Querschnitt.

Die Adsorptionsanlage weist zwei wechselweise im regenerierenden und adsorbierenden Betrieb betriebene Adsorber 1, 2 auf, deren Ein- und Ausgangsleitungen 3-6 zu Vierwegeventilen 7, 8 führen. Über das Vierwegeventil 7 ist zu entfeuchtende Druckluft zuführbar, während über das Vierwegeventil 8 die entfeuchtete Luft abführbar ist. Die Vierwegeventile 7, 8 sind so einstellbar, daß sowohl im adsorbierenden als auch im regenerierenden Betrieb die Adsorber 1, 2 von unten nach oben durchströmt werden. Der vierte freie Einlaß des Vierwegeventils 7 ist über eine Rückschlagklappe 9 mit einem Lufterhitzer 10 verbunden, der einen Einlaß 11 für Umgebungsluft aufweist. An der Verbindungsleitung zwischen dem Vierwegeventil 7 und der Rückschlagklappe 9 ist ein Expansionsventil 12 mit einem nachgeschalteten Schalldämpfer 13 angeschlossen.

An dem freien vierten Auslaß des Vierwegeventils 8 ist über ein Schaltventil 14 ein für den Saugbetrieb ausgelegtes Gebläse 15 angeschlossen. An der Verbindungsleitung zwischen dem Schaltventil 14 und dem Gebläse 15 liegt ein Temperaturfühler 16.

Das Vierwegeventil 8 ist mit einem an den Leitungen 4,5 angeschlossenen Bypass überbrückt, in dem ein Schaltventil 17 und ein Drosselventil 18 liegen.

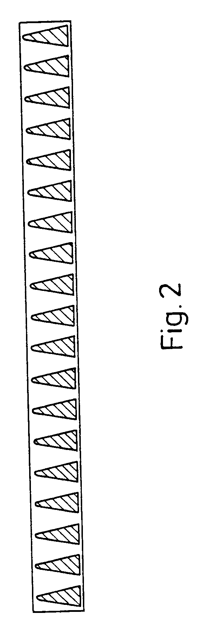

In den beiden Adsorbern 1, 2 ruht das nicht dargestellte Trockenmittel auf einem Siebboden 19, 20, der gemäß Fig. 2 aus parallel zueinander angeordneten im Querschnitt dreieckigen Stäben besteht, deren Oberseite eine glatte Fläche mit schmalen Schlitzen bildet, die schmaler sind als die Körnung des Trockenmittels. Aufgrund der maßstabgerecht wiedergegebenen Form ergibt sich zum einen in Strömungsrichtung ein geringer Strömungswiderstand für die zu trocknende aber auch regenerierende und kühlende Luft und zum anderen einen Selbstreinigung.

Im folgenden wird der Betrieb der Adsorptionsanlage erläutert. Während der Adsorber 1 im adsorbierenden Betrieb betrieben wird, wird der Adsorber 2 regeneriert. Die zu entfeuchtende Luft wird unter Druck von einem nicht dargestellten Gebläse entsprechend der gestrichelten Linie über das Vierwegeventil 7, die Eingangsleitung 3 dem Adsorber 1 von unten zugeführt, wo die feuchte Luft entfeuchtet wird. Die entfeuchtete Luft gelangt dann über die Ausgangsleitung 4 und das Vierwegeventil 8 zu der Verbrauchsstelle.

Für die Regenerierung ist in der ersten Phase der Lufterhitzer 10 eingeschaltet. Von dem im Saugbetrieb betriebenen Gebläse 15 wird über den Einlaß 11, den Erhitzer 10, die Rückschlagklappe 9, das Vierwegeventil 7 und die Eingangsleitung 6 entsprechend der strichpunktierten Linie dem Adsorber 2 erwärmte Umgebungsluft zugeführt. Diese erwärmte Umgebungsluft wird mit der Feuchtigkeit des Adsorptionsmittels beladen und über die Ausgangsleitung 5, das Schaltventil 14 durch das Gebläse 15 in die Umgebung abgeblasen. Diese Phase dauert so lange, bis daß ein bestimmtes Temperaturniveau vom Temperaturfühler 16 festgestellt wird. Dieses Temperaturniveau ist ein Kriterium dafür, daß die Regenerationsphase mit erwärmter Luft beendet ist. Ober die nicht dargestellte Steuereinrichtung wird dann der Lufterhitzer 10 abgeschaltet. In der anschließenden zweiten Phase der Regeneration wird bei andauerndem Betrieb des Gebläses 15 kühle Umgebungsluft über den ausgeschalteten Erhitzer dem Adsorber 2 zugeführt. Sobald ein bestimmtes unteres Temperaturniveau erreicht ist, wird auch diese Phase beendet. Die Adsorptionsanlage kann dann umgeschaltet werden. Zur Vorbereitung der Umschaltung findet eine Druckangleichung in beiden Teilen der Adsorptionsanlage durch Öffnen des Schaltventils 17 statt. Die Vierwegeventile 7, 8 werden umgeschaltet und nach Sperrung des Schaltventils 17 kann dem Adsorber 2 zu entfeuchtende Luft zugeführt werden. Bevor die Regeneration des Adsorbers 1 eingeleitet wird, wird das Schaltventil 12 geöffnet und über den nachgeschalteten Schalldämpfer 13 der Adsorber 1 mit seinen Leitungen 3, 4 entlüftet.

## Patentansprüche

1. Warmregenerierende Adsorptionsanlage für feuchte, gasförmige Medien mit zwei parallel zueinander liegenden Adsorbern (1, 2), die im Wechsel von adsorbierendem Betrieb auf regenerierenden Betrieb mittels in ihren Zu- und Abfuhrleitungen (3-6) angeordneten Vierwegeventilen (7, 8) umschaltbar sind, sowie mit einem Lufterhitzer (10) und einem im Saugbetrieb betriebenen Gebläse (15), wobei für den regenerierenden Betrieb in einer ersten Phase das Gebläse (15) dem Adsorber (1) erwärmte Umgebungsluft über den eingeschalteten Lufterhitzer (10) und in einer anschließenden zweiten Phase kühle Umgebungsluft mit Unterdruck über den ausgeschalteten Lufterhitzer (10) zuführt, **dadurch gekennzeichnet**, daß der Lufterhitzer (10) mit dem Einlad eines der beiden Vierwegeventile (7) und das Gebläse (15) mit dem Auslaß des anderen Vierwegeventils (8) verbunden ist.

2. Adsorptionsanlage nach Anspruch 1, **dadurch gekennzeichnet**, daß in der vom Vierwegeventil (8) zum Gebläse (15) führenden Leitung ein Temperaturfühler (16) einer Steuereinrichtung für den Betrieb des Lufterhitzers (10) in beiden Phasen der Regeneration liegt.

3. Adsorptionsanlage nach Anspruch 1 oder 2, **dadurch gekennzeichnet**, daß das Trockenmittel in den sowohl im adsorbierenden als auch im regenerierenden Betrieb ausschließlich von unten nach oben mit Luft durchströmten Adsorbern (1, 2) auf einem Siebboden (19, 20) ruht, der aus parallelen, im Querschnitt dreieckigen Stäben besteht, die mit einer in einer Ebene liegenden Seite die Stützfläche bilden und mit ihren winkeligen Kanten nach unten weisen.

## Claims

1. A heat recovery adsorption plant for damp gaseous media, having : two adsorbers (1, 2) which are disposed parallel with one another and which can be alternately switched over from adsorption operation to recovery operation by means of four-way valves (7, 8) disposed in their delivery and discharge lines (3-6) ; and an air heater (10) and a suctionally operated blower (15), the blower (15) supplying for recovery operation heated surrounding air to the adsorber (1) via the switched-on air heater (10) in a first phase, and supplying cool surrounding air at negative pressure via the switched-off air heater (10) in a following second phase, characterized in that the air heater (10) is connected to the inlet of one of the two four-way valves (7) and the blower (15) is connected to the outlet of the other four-way valve (8).

2. An adsorption plant according to claim 1, characterized in that a temperature sensor (16) of a control device for the operation of the air heater (10) in both phases of recovery is incorporated in the line extending from the four-way valve (8) to the blower (15).

3. An adsorption plant according to claims 1 or 2, characterized in that both in adsorption and recovery operation the drying agent rests on a sieve bottom (19, 20) in the adsorbers (1, 2), through which air flows exclusively upwards in both adsorption and recovery operation, the sieve bottom consisting of parallel rods of triangular cross-section, which form the supporting surface by one side lying in the same plane, and whose angular edges point downwards.

**Revendications**

1. L'invention concerne une installation d'adsorption de régénération par la chaleur pour milieux gazeux humides avec deux adsorbeurs (1, 2) disposés en parallèle l'un à l'autre qui, lors du passage du régime adsorbant au régime régénérant, sont commutables au moyen de vannes à quatre voies (7, 8) disposées dans leurs conduites d'amenée et d'évacuation (3-6), ainsi qu'avec un réchauffeur d'air (10) et un ventilateur (15) entraîné en régime d'aspiration, le ventilateur (5), pour le régime régénérant, amenant dans une première phase de l'air ambiant réchauffé à l'adsorbeur (1) par l'intermédiaire du réchauffeur d'air (10) mis en service et, dans une seconde phase suivante, de l'air ambiant froid sous dépression par l'intermédiaire du réchauffeur d'air (10) mis hors service caractérisé en ce que le réchauffeur d'air (1) est relié à l'admission d'une des deux vannes à quatre voies (7) et le ventilateur (15) à l'échappement de l'autre vanne à quatre voies (8).

2. Inadaptation d'adsorption selon la revendication 1, caractérisé en ce qu'un capteur de température (1) d'un dispositif de commande pour le fonctionnement du réchauffeur d'air (10) dans les deux phases de la régénération se trouve dans la conduite allant de la vanne à quatre voies (8) ou ventilateur (15).

3. Installation d'adsorption selon la revendication 1 ou 2, caractérisé en ce que le milieu de séchage dans les adsorbeurs (1, 2) traversé par de l'air exclusivement du bas vers le haut aussi bien en régime adsorbant que régénérant repose sur un fond percé (19, 20) qui est constitué de barres parallèles, triangulaires en section transversale, qui forment, avec une face plane se trouvant dans un plan, la surface d'appui et, avec leur arête à angle aigu, sont tournées vers le bas.

Fig. 1

Fig. 2